# EUROPÄISCHE PATENTANMELDUNG

(11) **EP 4 166 638 A1**
(43) Veröffentlichungstag der Anmeldung: **19.04.2023**
(21) Anmeldenummer: 21202432.7
(22) Anmeldetag: 13.10.2021
(51) Int. Cl.: C11D 17/00, C11D 11/00, C11D 3/20, C11D 3/10, G02C 13/00

(54) **REINIGUNGSTABLETTE ZUR REINIGUNG VON BRILLEN**

(71) Anmelder: CLARO Products GmbH, 5081 Anif (AT)
(72) Erfinder: BRUDL, Christoph, 5081 Anif (AT); NIEDERREITER, Melanie, 5081 Anif (AT)
(74) Vertreter: SONN Patentanwälte OG

(57) **Zusammenfassung**

Die Erfindung betrifft eine Reinigungstablette zur Reinigung von Brillen, umfassend Zitronensäure und Hydrogencarbonat, mit einem molaren Verhältnis zwischen Zitronensäure und Hydrogencarbonat im Bereich von 1:1 bis 1:5 und einem Massenanteil von Zitronensäure und Hydrogencarbonat im Bereich von 8 bis 28 Gew.-%, bezogen auf das Gesamtgewicht der Reinigungstablette.

## Beschreibung

Die vorliegende Erfindung betrifft eine Reinigungstablette zur Reinigung von Brillen, vorzugsweise mithilfe eines Brillenreinigungsbehältnisses.

Die Reinigung von Brillen wird meist mithilfe von Brillenputztüchern, etwa Mikrofasertüchern, durchgeführt. Dabei wird allerdings lediglich auf die Reinigung der Brillengläser abgezielt, nicht aber auf die Reinigung des Brillengestells. Bei unzureichender Reinigung des Brillenputztuchs wird der auf den Brillengläsern gebildete Schmutzfilm außerdem nicht mehr vollständig entfernt, sondern beim Putzen vielmehr verschmiert. Zwar gibt es auch für den einmaligen Gebrauch ausgelegte Brillenputztücher, die eine passable Reinigung der Brillengläser erzielen, diese sind allerdings als Wegwerfartikel ausgelegt, unhandlich bei der Anwendung und relativ teuer.

Um diese Nachteile zu umgehen, wurden verschließbare Brillenreinigungsbehältnisse entwickelt, die eine schnelle und einfache Reinigung der gesamten Brille ermöglichen. Solche Brillenreinigungsbehältnisse werden etwa in EU 0056269830001 S, EU 0056269830002 S, GB 90056269830001 S und GB 90056269830002 S beschrieben. Dabei wird das Brillenreinigungsbehältnis ungefähr zur Hälfte mit Wasser gefüllt und eine geringe Menge (ungefähr zwei Spritzer) einer Reinigungslösung wird zugegeben. Anschließend wird die Brille eingesetzt und das Brillenreinigungsbehältnis wird flüssigkeitsdicht verschlossen. Das Brillenreinigungsbehältnis wird für ungefähr 15 sec geschüttelt, die Brille wird entnommen, unter klarem Wasser abgespült und mit einem Mikrofasertuch trockengewischt. Ein weiteres Brillenreinigungsbehältnis ist in DE 202015007206 U1 beschrieben, wobei die Reinigung auch hier mithilfe einer Reinigungsflüssigkeit erfolgt.

Mit den im Stand der Technik bekannten Brillenreinigungsbehältnissen wird eine sehr gute Reinigungswirkung erzielt. Die dafür notwendige Reinigungsflüssigkeit muss allerdings griffbereit sein, was insbesondere unterwegs umständlich ist, da ein Behältnis, in dem die Reinigungsflüssigkeit vorgesehen wird, relativ viel Platz braucht. Dazu kommt die Erschwernis, dass bei Flugreisen Flüssigkeiten im Handgepäck nur in eingeschränktem Umfang transportiert werden dürfen.

Durch Vorsehen einer festen Reinigungszusammensetzung, die sich in Wasser auflöst, lässt sich dieses Problem umgehen und ein vereinfachter, platzsparender Transport wird ermöglicht. Der Verbraucher kann dadurch einfach und auf umweltfreundliche Weise (geringere Transportkosten, kein Anfallen von Müll) eine flüssige Reinigungszusammensetzung herstellen.

Eine feste Reinigungszusammensetzung in Form einer Reinigungstablette zur Reinigung von harten Oberflächen (etwa lackiertem Holz, gefliesten Wänden, Waschbecken, Fußböden) ist aus DE 602004009668 T2 bekannt.

Auch Reinigungszusammensetzungen bzw. -tabletten, die Brausesysteme enthalten, sind im Stand der Technik bekannt, da die Inkorporation gasentwickelnder Systeme die Zerfalls- und Lösezeiten reduziert.

Tabletten bzw. Einheitsportionen von Waschmittelzusammensetzung, die Brausesysteme enthalten, werden beispielsweise in WO 98/24873 A1, WO 00/04117 A2, WO 00/04124 A2, WO 93/08255 A1, WO 02/086048 A1, WO 03/062360 A1, WO 2016/087639 A1, EP 1134281 A1 und EP 3825392 A1 beschrieben.

WO 2017/009447 A1 offenbart Reinigungstabletten zur Reinigung der Innenseite von Karaffen, insbesondere zur Entfernung von Weinrückständen aus Dekantern, wobei der Massenanteil von Hydrogencarbonat und Zitronensäure in der Reinigungstablette bei 30-70 Gew.-% liegt.

In EP 0334060 B1 wird eine Reinigungstablette für Zahnprothesen beschrieben, die unter anderem 10-30 Gew.-% Natriumhydrogencarbonat (d.h. 7,3-21,8 Gew.-% Hydrogencarbonat) und 5-20 Gew.-% Zitronensäure umfasst. Allerdings ist der Reinigungsprozess bei einer Temperatur der Reinigungslösung von 30 °C - d.h. über Raumtemperatur - erst nach etwa 10 min vollständig abgeschlossen.

Die US 2014/0000658 A1 befasst sich mit Reinigungszusammensetzungen, etwa in Pulver- oder Tablettenform, zur Reinigung von wiederverwendbaren Trinksystemen und Wasserbehältern. Diese Zusammensetzungen umfassen ein Oxidationsmittel, Natriumcarbonat und/oder Natriumhydrogencarbonat, eine schwache Säure (z.B. Zitronensäure) und Kombinationen bestimmter Tenside. Es wird beschrieben, dass der Behälter mit der Zusammensetzung zur Reinigung 1 min bis 24 h stehen gelassen wird, die konkreten Ausführungsbeispiele offenbaren allerdings Standzeiten von zumindest 5 min bzw. 10 min.

In keinem der Dokumente des Stands der Technik wird allerdings eine Reinigungstablette zur Reinigung von Brillen beschrieben.

Es ist daher die Aufgabe der gegenständlichen Erfindung, eine Reinigungstablette zur Reinigung von Brillen bereitzustellen, die einen platzsparenden Transport und eine schnelle, effektive Brillenreinigung ermöglicht, die das Mitführen einer Reinigungslösung nicht erfordert.

Diese Aufgabe wird erfindungsgemäß dadurch gelöst, dass bei einer Reinigungstablette zur Reinigung von Brillen, umfassend Zitronensäure und Hydrogencarbonat, das molare Verhältnis zwischen Zitronensäure und Hydrogencarbonat in der Reinigungstablette im Bereich von 1:1 bis 1:5 liegt, bevorzugt 1:2 bis 1:4, und dass der Massenanteil von Zitronensäure und Hydrogencarbonat im Bereich von 8 bis 28 Gew.-%, bevorzugt 10 bis 25 Gew.-%, liegt, bezogen auf das Gesamtgewicht der Reinigungstablette. Die Erfindung betrifft weiters die Verwendung der Reinigungstablette zur Reinigung von Brillen.

Während des Auflösens der Reinigungstablette entsteht durch die Reaktion von Zitronensäure und Hydrogencarbonat im erfindungsgemäßen molaren Verhältnis zwischen Zitronensäure und Hydrogencarbonat Kohlenstoffdioxid in Form von Gasbläschen. Bereits die Bildung dieser Gasbläschen führt zu einer sehr guten mechanischen Reinigung der Brille, sodass Verschmutzungen effektiv entfernt werden.

Somit wäre es ausreichend, den Reinigungsvorgang der Brille in einem geeigneten, verschließbaren Reinigungsbehältnis durchzuführen, ohne dieses zu bewegen, insbesondere zu schütteln. Die Reinigungsdauer kann, wenn gewünscht, durch Schütteln des Brillenreinigungsbehältnisses weiter verkürzt werden, da die Reinigung somit effizienter ist.

Durch Einsatz von Zitronensäure und Hydrogencarbonat mit einem Massenanteil im erfindungsgemäßen Bereich wird eine für die Reinigung optimale Menge an kohlenstoffdioxidhaltigen Gasbläschen gebildet. Die Verwendung eines Massenanteils von Zitronensäure und Hydrogencarbonat unterhalb des erfindungsgemäßen Bereichs ist zu gering, um die gewünschte Reinigungswirkung zu erreichen. Oberhalb des erfindungsgemäßen Bereichs bildet sich aufgrund der großen entstehenden Kohlenstoffdioxidmenge ein starker Überdruck im Brillenreinigungsbehältnis aus, sodass dessen Öffnen nach Beendigung des Reinigungsvorgangs erschwert wird. Auch kann keine signifikante Verbesserung der Reinigungswirkung gegenüber dem erfindungsgemäßen Bereich festgestellt werden.

Es wurde überraschenderweise festgestellt, dass durch den Einsatz von Zitronensäure und Hydrogencarbonat in dem erfindungsgemäßen molaren Verhältnis und Massenanteil eine ausgezeichnete und schnelle Brillenreinigung ermöglicht wird.

Erfindungsgemäß geht die Reinigung einer Brille mit der Reinigungstablette derart vonstatten, dass das Brillenreinigungsbehältnis mit Wasser gefüllt wird. Wird das Brillenreinigungsbehältnis während des Reinigungsvorgangs geschüttelt, ist eine Befüllung bis etwa zur Hälfte ausreichend. Ansonsten sollte die Wassermenge so gewählt werden, dass die Brille vorzugsweise vollständig in Wasser eingetaucht ist. Anschließend wird die Reinigungstablette zum Wasser zugegeben, sie löst sich vorzugsweise in maximal 30 sec auf, noch bevorzugter in maximal 15 sec. Das Wasser hat dabei vorzugsweise eine Temperatur im Bereich von 10 bis 40 °C, bevorzugt von 15 bis 25 °C, und das Auflösen erfolgt bevorzugt bei Normaldruck. Die Brille wird nun in das die Reinigungslösung enthaltende Brillenreinigungsbehältnis eingesetzt bzw. eingelegt, und dieses wird flüssigkeitsdicht verschlossen. Der Reinigungsvorgang erfolgt sehr schnell und dauert maximal 5 min, bevorzugter maximal 2 min, noch bevorzugter maximal 30 sec. Eine weitere Beschleunigung des Reinigungsvorgangs ist möglich, indem das Brillenreinigungsbehältnis geschüttelt wird. Dadurch kann der Reinigungsvorgang sogar auf eine Zeitdauer von unter 20 sec, bevorzugt unter 15 sec, reduziert werden. Nach dem Reinigungsvorgang wird das Brillenreinigungsbehältnis geöffnet, die Brille kann nun entnommen und, wenn gewünscht, unter klarem Wasser abgespült und (etwa mit einem Mikrofasertuch) trockengewischt werden.

Die durch das Auflösen der Reinigungstablette in Wasser gebildete Lösung kann einen pH-Wert im Bereich von 5 bis 9 aufweisen. Die Auswahl des pH-Werts sollte in Abstimmung der für das Brillengestell und die Brillengläser eingesetzten Materialien erfolgen, insbesondere, wenn diese aus Kunststoff gefertigt sind. Das Brillengestell kann aus Kunststoff oder Metall vorgesehen sein. Bei Kunststoffen ist der Einsatz von Polycarbonat aufgrund der guten Bruchfestigkeit gebräuchlich, aber auch die Verwendung von Polyamid aufgrund seiner guten Widerstandsfähigkeit gegen Versprödung und Rissbildung, oder Epoxidharz aufgrund seiner guten Kratzfestigkeit. Für ein metallisches Brillengestell können aufgrund ihrer hohen Bruchfestigkeit Edelstahl, Silber, Bronze oder Titan zum Einsatz kommen. Die Brillengläser können aus Kunststoff (etwa Polycarbonat, Trivex, CR-39, Tribid) oder Glas (insbesondere Mineralglas) vorgesehen sein. Manche Kunststoffe, etwa Polycarbonat, sind gegenüber Basen unbeständig, sodass dementsprechend ein pH-Wert im sauren bzw. neutralen Bereich zu wählen ist. Andererseits sind beispielsweise gängige Polyamid-Typen (etwa PA 6, PA 66, PA 11, PA 12) beständig gegen schwache Laugen, während sie gegen Säuren und starke Laugen unbeständig sind. Epoxidharze wiederum sind gegen starke Säuren und Laugen unbeständig, weisen jedoch eine gute Beständigkeit gegen schwache Säuren und Laugen auf. Auch bei aus Glas bestehenden Brillengläsern kann der wiederholte Kontakt mit starken Laugen zu Schlierenbildung und Eintrübung führen.

Bevorzugt liegt der pH-Wert der durch das Auflösen der Reinigungstablette in Wasser gebildeten Lösung von 200 bis 300 ml daher im Bereich von 5,5 bis 8,5, insbesondere entweder im Bereich von 5,5 bis 7, im Bereich von 6,5 bis 7,5 oder im Bereich von 7 bis 8,5, je nachdem, aus welchen Materialien das Brillengestell und die Brillengläser bestehen. Besonders bevorzugt liegt der pH-Wert der durch das Auflösen der Reinigungstablette in Wasser gebildeten Lösung von 200 bis 300 ml im Bereich von 6 bis 7, d.h. im schwach sauren Bereich, da dies eine unbeschadete Reinigung der meisten gängigen Brillenmodelle und dementsprechend einen sehr breiten Einsatz der Reinigungstablette ermöglicht. Zur Ermittlung des pH-Werts kann die Reinigungstablette in der für die Reinigung der Brille im Brillenreinigungsbehältnis eingesetzten Wassermenge aufgelöst werden. Zur Ermittlung des pH-Werts kann die Reinigungstablette in ein Volumen von 200 bis 300 ml Wasser eingebracht werden, dies entspricht ungefähr der Menge an Wasser, die für die Brillenreinigung mithilfe eines Brillenreinigungsbehältnisses benötigt wird. Der pH-Wert der Lösung kann nach Auflösen der Reinigungstablette und Homogenisieren der Lösung mit einem handelsüblichen pH-Meter gemessen werden. Beispielsweise können sich Reinigungstabletten, deren Auflösen in Wasser zu unterschiedlichen pH-Werten führt, in ihrer Farbe unterscheiden (etwa durch Zusatz eines Farbstoffs oder eines pH-Indikators), um eine einfache Differenzierung zu ermöglichen und das versehentliche Reinigen der Brille in einer das Brillengestell und/oder die Brillengläser schädigenden Reinigungslösung zu vermeiden.

Das Hydrogencarbonat in der Reinigungstablette liegt vorzugsweise als Natriumhydrogencarbonat vor. Der Einsatz von Kaliumhydrogencarbonat ist zwar möglich, aber durch das Vorliegen von Kalilaugen und Kaliumsalzen in Kombination mit Fettsäuren können sich Kaliumsalze der Fettsäuren ausbilden, die im Gegensatz zu Natriumsalzen weich bis schmierig und hygroskopisch sind. Daher wird durch den Einsatz von Natriumhydrogencarbonat in der Reinigungstablette eine signifikant bessere Reinigungswirkung erzielt.

Die Zitronensäure liegt in der Reinigungstablette vorzugsweise in wasserfreier Form vor, d.h. als Zitronensäure-Anhydrat, damit das Gewicht und dementsprechend die Größe der Reinigungstablette möglichst geringgehalten werden kann.

Bevorzugt umfasst die Reinigungstablette mindestens einen weiteren Inhaltsstoff, ausgewählt aus der Gruppe umfassend ein Tensid, ein Stellmittel, einen Komplexbildner, ein Sprengmittel, einen Farbstoff, einen Aromastoff oder eine Kombination davon.

Gemäß einer bevorzugten Ausführungsform der vorliegenden Erfindung ist vorgesehen, dass die Reinigungstablette ein Enzym umfasst. Diese Enzymzugabe verbessert die Reinigungswirkung der Tablette weiter, weil sie bestimmte Arten von Verunreinigungen (etwa fetthaltige oder eiweißhaltige Verunreinigungen) abbauen können. Der Massenanteil des Enzyms in der Reinigungstablette kann bis zu 2 Gew.-% betragen, vorzugsweise bis zu 1 Gew.-%, besonders bevorzugt bis zu 0,1 Gew.-%, bezogen auf das Gesamtgewicht der Reinigungstablette. Bevorzugt umfasst die Reinigungstablette eine Protease, Lipase, Keratinase und/oder Amylase. Lipasen spalten fetthaltigen Schmutz in Glycerin und Fettsäuren und erleichtern dadurch die Entfernung fetthaltiger Verschmutzungen, etwa Cremen oder Sonnenöl. Mit Proteasen lassen sich eiweißhaltige Verunreinigungen (beispielsweise Hauptschuppen) leicht entfernen. Keratinasen bauen Haare ab, während Amylasen stärkehaltige Verschmutzungen, etwa Kosmetika (z.B. Rouge, Puder) abbauen. Da Brillengläser hauptsächlich fettige Verschmutzungen aufweisen, umfasst die Reinigungstablette besonders bevorzugt eine Lipase.

Noch eine bevorzugte Ausführungsform der vorliegenden Erfindung sieht vor, dass die Reinigungstablette ein Tensid umfasst, etwa ein anionisches, nichtionisches oder zwitterionisches Tensid, um die Reinigungswirkung zu verbessern. Auch der Einsatz einer Kombination mehrerer Tenside aus derselben oder aus unterschiedlichen Gruppen ist möglich. Vorzugsweise wird in der Reinigungstablette ein schwach schäumendes Tensid eingesetzt, um die Reinigungswirkung der Gasbläschen nicht zu behindern, sondern vielmehr eine gute Balance zwischen der Reinigungswirkung der Gasbläschen und der zusätzlichen Reinigungswirkung des Tensids zu erhalten. Ein anionisches Tensid kann aus der Gruppe der verzweigten C₆-C-₁₂-Alkylsulfate ausgewählt sein. Ein zwitterionisches Tensid kann der Gruppe der C₆-C₁₂-Alkyliminopropionate entstammen. Ein nichtionisches Tensid kann aus der Gruppe der alkoxylierten Fettalkohole ausgewählt sein, beispielsweise kann ein ethoxylierter und/oder propoxylierter Fettalkohol zum Einsatz kommen. Bevorzugt ist das Tensid ein nichtionisches Tensid, da ein Tensid dieser Gruppe zwar in Wasser löslich ist, aber keine Ionen bildet. Bevorzugt ist das Tensid aus der Gruppe der alkoxylierten Fettalkohole, Isooctylsulfate, Isooctylsulfosuccinate, Capryliminopropionate, Caprylamidopropylbetaine oder einer Kombination davon ausgewählt. Besonders bevorzugt wird ein Alkoxylat eines Fettalkohols eingesetzt, da dadurch eine besonders gute Balance zwischen der Reinigungswirkung des Tensids und der Reinigungswirkung der Gasbläschen erzielt wird, sodass der Reinigungsvorgang besonders effizient und wirksam verläuft. Der Massenanteil des Tensids in der Reinigungstablette kann im Bereich von 0,5 bis 10 Gew.-% liegen, vorzugsweise liegt der Massenanteil des Tensids im Bereich von 0,1 bis 5 Gew.-%, besonders bevorzugt im Bereich von 1 bis 3 Gew.-%, bezogen auf das Gesamtgewicht der Reinigungstablette.

Bevorzugt ist vorgesehen, dass die Reinigungstablette einen Komplexbildner umfasst. Dabei kann es sich um Lewisbasen handeln, die etwa Anionen mit freien Elektronenpaaren beinhalten und mit Metallionen bzw. Metallatomen als Lewissäuren Koordinationsverbindungen bilden. Dementsprechend können mithilfe eines Komplexbildners (unerwünschte) chemische Eigenschaften von Metallionen maskiert werden. Als Komplexbildner in der Reinigungstablette kann etwa Ethytendiaminotriacetat (TED), Ethylendiamintetraacetat (EDTA), Methylglycindiessigsäure-Trinatriumsalz (MGDA) bzw. das Trinatriumsalz davon, L-Glutaminsäure-N,N-diessigsäure bzw. das Tetranatriumsalz davon, Oxalat, Maleat, Tartrat, Citrat (bzw. Natriumsalze dieser vier Substanzen) oder eine Kombination mehrerer Komplexbildner eingesetzt werden. Auch der Einsatz eines Phosphonats, beispielsweise basierend auf 1-Hydroxyethan-1,1-diphosphonsäure, ist möglich. Zitronensäure kann zwar als Komplexbildner fungieren, in der erfindungsgemäßen Reinigungstablette handelt es sich bei dem Komplexbildner aber um eine von Zitronensäure verschiedene Substanz. Vorzugsweise wird als Komplexbildner in der Reinigungstablette Natriumcitrat eingesetzt, insbesondere Trinatriumcitrat-Anyhdrat, da Citrat als Wasserenthärter wirkt. Dies hat einen positiven Effekt auf die Entfernung bestehender Kalkflecken auf der Brille bzw. im Inneren des Brillenreinigungsbehältnis und wirkt auch der Entstehung weiterer Kalkflecken entgegen. Dieser Effekt wird durch das Zusammenwirken mit anderen erfindungsgemäßen Bestandteilen der Reinigungstablette weiter verstärkt. Auch wird die Citratmenge mit fortschreitendem Auflösen der Reinigungstablette in Wasser durch die Reaktion der Zitronensäure mit dem Hydrogencarbonat erhöht, was den Effekt der Wasserenthärtung weiter verbessert. In diesem Bereich ist die erzielte Wirkung des Komplexbildners am besten, während eine weitere Erhöhung des Gehalts an Komplexbildner zu keiner signifikanten Verbesserung mehr führt.

Noch eine bevorzugte Ausführungsform der vorliegenden Erfindung sieht vor, dass die Reinigungstablette einen Aromastoff umfasst, etwa ein Parfüm, ein Duftstoff oder eine Kombination davon, um die Attraktivität der Reinigungstablette für den Anwender zu verbessern und eine positive Assoziation zu bewirken. Parfüms, die in der Reinigungstablette vorgesehen sein können, sind etwa Parfümöle oder Parfümrohstoffe, die Alkohole, Ketone, Aldehyde, Ester, Ether, Nitrile, Alkene und Kombinationen davon umfassen. Duftstoffe, die in der Reinigungstablette vorgesehen sein können, umfassen Ester (etwa Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styralylsalipropionate), Ether (etwa Benzylethylether), lineare C₈-C₁₈-Alkanale, Citral, Citronellal, Citronellyloxyacetaldehyd, Cyclamenaldehyd, Hydroxycitronellal, Lilial und Bourgeonal, Ketone (etwa lonone, alpha-Isomethylionon und Methyl-Cedrylketon), Alkohole (etwa Anethol, Citronellol, Eugenol, Geraniol, Linalool, Phenylethylalkohol und Terpineol), Kohlenhydrate (etwa Terpene, z.B. Limonen und Pinen), oder eine Kombination davon. Auch der Einsatz eines natürlich vorkommenden Öls, das etwa aus Kiefer, Zitrus, Jasmin, Rose, Salbei, Kamille, Nelke, Melisse, Minze, Orangenblüte, Orangenschale, Sandelholz, Zimt, Linde Blüte, Wacholderbeere, Olibanum und Labdanum gewonnen wird, oder einer Kombination davon bzw. einer Kombination eines natürlich vorkommenden Öls mit einem weiteren Aromastoff, ist möglich. Der Aromastoff kann in der Reinigungstablette in einer Menge im Bereich von 0,01 bis 1 Gew.-% eingesetzt werden, bevorzugt erfolgt der Einsatz des Aromastoffs im Bereich von 0,01 bis 0,5 Gew.-%, besonders bevorzugt im Bereich von 0,02 bis 0,08 Gew.-%, bezogen auf das Gesamtgewicht der Reinigungstablette. In diesem Gewichtsbereich wird ein wahrnehmbarer, angenehmer Geruch erzielt, der andererseits aber auch nicht zu intensiv ist.

Weiters ist günstig, wenn die Reinigungstablette ein Stellmittel umfasst. Dieses kann nicht nur die Rieselfähigkeit der für die Reinigungstablette eingesetzten Zusammensetzung während des Produktionsprozesses, etwa der Tablettierung, erhöhen, sondern auch die für den Auflösungsvorgang der Reinigungstablette in Wasser benötigte Zeitspanne reduzieren. Besonders bevorzugt wird Natriumsulfat aufgrund seiner guten Wasserlöslichkeit als Stellmittel eingesetzt.

Auch wenn es durch den Einsatz von Zitronensäure und Hydrogencarbonat in dem erfindungsgemäßen molaren Verhältnis und Massenanteil ermöglicht wird, auf den Einsatz von Sprengmitteln in der Reinigungstablette zu verzichten, ist bevorzugt vorgesehen, dass die Reinigungstablette ein Sprengmittel umfasst. Einerseits kann das Sprengmittel als Bindemittel wirken, sodass die Partikelhaftung erhöht und somit das Verpressen zu haltbaren Tabletten verbessert wird. Andererseits kann der Zerfall der Reinigungstablette während des Auflösens in Wasser beschleunigt werden, sodass der Reinigungsvorgang noch effizienter und kürzer gestaltet werden kann. Als Sprengmittel in der Reinigungstablette kann Stärke (etwa Mais-, Reis- oder Kartoffelstärke), Stärkederivat (etwa Carboxymethylstärke, modifizierte oder vorgelatinierte Stärke, Natriumstärkeglycolat), Cellulose, Cellulosederivat (etwa Carboxymethylcellulose, vernetzte modifizierte Cellulose, mikrokristalline Cellulose), Pektin, Zucker (etwa Glucose, Saccharose, Lactose, Mannit, Sorbit, Dextran, Maltodextrin, Mannit), Carrageen, Alginat, Schellack, Xanthangummi, natürlich abgeleitetes Wachs (etwa Bienenwachs, hydriertes Jojobawachs, Carnaubawachs, Reiskleiewachs), synthetisches Wachs, Paraffin, Talkum, Gelatine, Lanolin, wasserlösliches Polymer (etwa Polyethylenglycol, Polyvinylacetat, Polyvinylpyrrolidon, Polyacrylsäure, Polyacrylat), sowie Derivate oder eine Kombination davon eingesetzt werden.

Für die Unterscheidung von Reinigungstabletten, deren Auflösen in Wasser zu unterschiedlichen pH-Werten führt, bzw. von Reinigungstabletten mit verschiedenen Zusammensetzungen ist es günstig, wenn die Reinigungstablette einen Farbstoff (bzw. ein Färbemittel) umfasst. Der Farbstoff kann aus allen Arten von Farbstoffen, die vorzugsweise wasserlöslich sind, ausgewählt sein. Beispielsweise kann der Farbstoff ein polymerer Farbstoff, ein anionischer Farbstoff (etwa ein Nitrosofarbstoff), oder Naphtholgrün (allein oder z.B. in Kombination mit einem geeigneten blauen Farbstoff) sein. Auch kann ein pH-Indikator als Farbstoff verwendet werden.

Die Härte der Reinigungstablette wird nach der Methode Nr. 2.9.8 der Europäischen Pharmakopöe (Ph.Eur.) bestimmt. Dabei wird die Kraft, die für das Zerdrücken bzw. Zerbrechen einer Tablette erforderlich ist, gemessen. Bevorzugt weist die Reinigungstablette eine Härte im Bereich von 20 bis 70 N auf, besonders bevorzugt 40 bis 60 N. Die Inhaltsstoffe der Reinigungstablette liegen dadurch in kompakter und gepresster Form vor. Dadurch wird trotz der geringen Größe der Reinigungstablette eine gute Reinigungswirkung sichergestellt.

Weiters ist günstig, wenn die Reinigungstablette eine mittlere arithmetische Höhe (Sa) im Bereich von 0,1 bis 5 µm aufweist, bevorzugt 0,5 bis 3 µm (bestimmt nach DIN EN ISO 25178-2:2012-09). Alternativ bzw. zusätzlich dazu weist die Reinigungstablette vorzugsweise einen Mittelrauwert (Ra) im Bereich von 0,1 bis 5 µm, bevorzugt 0,5 bis 3 µm, auf (bestimmt nach DIN EN ISO 4287:2010-07). Dadurch werden eine gute Haptik und ein gutes Handling erzielt, und ein Abrutschen der Finger auf der Tablettenoberfläche wird vermieden.

Vorzugsweise weist die Reinigungstablette sowohl eine Härte im Bereich von 20 bis 70 N, besonders bevorzugt 40 bis 60 N, als auch eine mittlere arithmetische Höhe im Bereich von 0,1 bis 5 µm, bevorzugt 0,5 bis 3 µm, auf. Alternativ zur mittleren arithmetischen Höhe, bzw. zusätzlich dazu, kann der Mittelrauwert im Bereich von 0,1 bis 5 µm, bevorzugt 0,5 bis 3 µm, liegen. Dadurch wird eine besonders gute Balance von Handling sowie Zerfalls- und Auflösungszeiten sichergestellt, und eine ausgezeichnete und schnelle Reinigungswirkung wird erzielt.

Die Reinigungstablette weist bevorzugt einen Durchmesser im Bereich von 10 bis 20 mm auf, bevorzugt im Bereich von 13 bis 17 mm, und/oder eine Höhe im Bereich von 2 bis 6 mm, bevorzugt 3 bis 5 mm. Dies ermöglicht einen platzsparenden Transport. Auch wird mit einem Durchmesser der Reinigungstablette im genannten Bereich sichergestellt, dass die Reinigungstablette nicht zu klein ist, um die Handhabung zu erschweren, sondern es wird vielmehr ein einfaches Handling ermöglicht.

Alle Ausführungsformen der vorliegenden Erfindung sind miteinander verknüpft, und jede Ausführungsform und/oder jedes offenbarte charakteristische Merkmal können miteinander und auch als beliebige Kombination von zwei oder mehr Ausführungsformen/-merkmalen kombiniert werden.

Unter dem Begriff "Reinigung" wird in dieser Anmeldung die Entfernung von Verunreinigungen, etwa Hautschuppen, Sebum, Fingerabdrücken, oder Rückständen von Sonnenölen, Cremen oder Kosmetikprodukten, verstanden.

Der Begriff "Brille(n)" in der vorliegenden Anmeldung umfasst Augengläser, etwa optische Sehhilfen oder Sonnenbrillen, aber auch andere Brillentypen, wie etwa Schibrillen, Sportbrillen oder Taucherbrillen.

Der Begriff "Härte" in der vorliegenden Anmeldung beschreibt die Widerstandskraft gegen das Zerdrücken von Tabletten, gemessen an der Kraft, die erforderlich ist, um die Tabletten durch Zerdrücken zu zerbrechen.

### Beispiel

In Tabelle 1 ist exemplarisch die Zusammensetzung einer Reinigungstablette gemäß der vorliegenden Erfindung angeführt. Dieses Beispiel soll zur Veranschaulichung der Erfindung, wie sie in dieser Anmeldung beschrieben ist, dienen, ohne deren Umfang einzuschränken.

**Tabelle 1: Zusammensetzung einer Reinigungstablette gemäß der vorliegenden Erfindung**

| **Bezeichnung** | **Funktion** | **Menge (Gew.-%)** |
|---|---|---|
| Zitronensäure-Anhydrat | Säure | 8 |
| Natriumhydrogencarbonat | Base | 16 |
| Natriumsulfat | Stellmittel | 63,95 |
| Trinatriumcitrat-Anhydrat | Komplexierungsmittel | 10 |
| Alkoxylat eines Fettalkohols | Nichtionisches Tensid | 2 |
| Parfümöl Green Tonic | Parfüm | 0,05 |
| **SUMME** | | 100 |

## Patentansprüche

1. Reinigungstablette zur Reinigung von Brillen, umfassend Zitronensäure und Hydrogencarbonat, mit einem molaren Verhältnis zwischen Zitronensäure und Hydrogencarbonat im Bereich von 1:1 bis 1:5 und einem Massenanteil von Zitronensäure und Hydrogencarbonat im Bereich von 8 bis 28 Gew.-%, bezogen auf das Gesamtgewicht der Reinigungstablette.

2. Reinigungstablette nach Anspruch 1, **dadurch gekennzeichnet, dass** sich die Reinigungstablette in Wasser in maximal 30 sec auflöst.

3. Reinigungstablette nach Anspruch 1 oder 2, **dadurch gekennzeichnet, dass** der pH-Wert einer wässrigen Lösung von 200 bis 300 ml, welche die gelöste Reinigungstablette enthält, im Bereich von 6 bis 7 liegt.

4. Reinigungstablette nach einem der Ansprüche 1 bis 3, **dadurch gekennzeichnet, dass** die Reinigungstablette ein Enzym umfasst.

5. Reinigungstablette nach einem der Ansprüche 1 bis 4, **dadurch gekennzeichnet, dass** die Reinigungstablette mindestens einen weiteren Inhaltsstoff, ausgewählt aus der Gruppe umfassend ein Tensid, ein Stellmittel, einen Komplexbildner, ein Sprengmittel, einen Farbstoff, einen Aromastoff oder eine Kombination davon umfasst.

6. Reinigungstablette nach einem der Ansprüche 1 bis 5, **dadurch gekennzeichnet, dass** die Reinigungstablette eine Härte im Bereich von 20 bis 70 N aufweist, gemessen nach Ph.Eur. 2.9.8.

7. Reinigungstablette nach einem der Ansprüche 1 bis 6, **dadurch gekennzeichnet, dass** die Oberfläche der Reinigungstablette eine mittlere arithmetische Höhe im Bereich von 0,1 bis 5 µm aufweist, gemessen nach DIN EN ISO 25178-2:2012-09.

8. Reinigungstablette nach einem der Ansprüche 1 bis 7, **dadurch gekennzeichnet, dass** die Reinigungstablette einen Durchmesser im Bereich von 10 bis 20 mm aufweist.

9. Verwendung einer Reinigungstablette nach einem der Ansprüche 1 bis 8 zur Reinigung von Brillen.
